# EUROPÄISCHE PATENTSCHRIFT

(11) **EP 3 287 656 B1**
(45) Veröffentlichungstag und Bekanntmachung des Hinweises auf die Patenterteilung: **20.03.2019**
(21) Anmeldenummer: 17184812.0
(22) Anmeldetag: 03.08.2017
(51) Int. Cl.: F16D 23/06

(54) **SYNCHRONISIERUNGSEINRICHTUNG, SOWIE EIN ZAHNRÄDERWECHSELGETRIEBE FÜR EIN FAHRZEUG**
SYNCHRONISATION UNIT AND A WHEEL GEAR BOX FOR A VEHICLE
DISPOSITIF DE SYNCHRONISATION ET BOÎTE MANUELLE À ENGRENAGES POUR UN VÉHICULE

(30) Priorität: 23.08.2016 EP 16185389
(43) Veröffentlichungstag der Anmeldung: 28.02.2018
(73) Patentinhaber: Oerlikon Friction Systems (Germany) GmbH, 28719 Bremen (DE)
(72) Erfinder: Christoffer, Ulf, 28719 Bremen (DE); Weber, Nils, 29699 Bomlitz (DE); Spreckels, Marcus Dr., 28832 Oyten (DE)
(74) Vertreter: Intellectual Property Services GmbH

(56) Entgegenhaltungen:
- FR-A- 1 385 860
- FR-A1- 2 821 652

## Beschreibung

Die Erfindung betrifft eine Synchronisiereinrichtung für ein Zahnräderwechselgetriebe gemäss dem Oberbegriff des unabhängigen Anspruchs 1. Die Erfindung betrifft weiter ein Zahnräderwechselgetriebe für ein Kraftfahrzeug gemäss dem unabhängigen Anspruch 12.

Aus der DE 199 28 597, EP 1 312 823 A1, FR 2821652 A1 und FR 1385860A1, ist eine gattungsgemässe Synchronisiereinrichtung für ein Zahnräderwechselgetriebe eines Fahrzeugs bekannt. Eine derartige Dreifachsynchronisiereinrichtung umfasst einen äußeren Synchronring, einen mittleren Synchronring und einen inneren Synchronring. Im Betriebszustand sind der äußere Synchronring und der innere Synchronring mit einem ersten Schaltelement im wesentlichen drehfest verbunden, und der mittlere Synchronring ist mit einem zweiten Schaltelement, das als ein zu schaltendes Gangrad ausgebildet ist, im wesentlichen drehfest verbunden. Der mittlere Synchronring umfasst einen ersten konischen Mittelringkörper mit einer ersten inneren Mittelringfläche und einer ersten äusseren Mittelringfläche, die den ersten Mittelringkörper in einer zu einer axialen Ringachse verlaufenden radialen Richtung jeweils begrenzen. Die erste innere Mittelringfläche erstreckt sich unter einem ersten inneren Mittelringwinkel und die erste äussere Mittelringfläche erstreckt sich unter einem ersten äusseren Mittelringwinkel zu der Ringachse, wobei der erste innere Mittelringwinkel und der erste äussere Mittelringwinkel gleich gross ausgebildet sind, d.h die erste innere Mittelringfläche und die erste äussere Mittelringfläche verlaufen parallel zueinander. Der äussere und innere Synchronring sind so ausgestaltet und angeordnet, dass bei einem Synchronisiervorgang, bei welchem der äussere und innere Synchronring in Richtung des zu synchronisierenden Gangrads verschoben wird, die erste innere Mittelringfläche mit dem inneren Synchronring zusammenwirkt und die erste äussere Mittelringfläche unmittelbar mit dem äusseren Synchronring zusammenwirkt.

Die Synchonisiereinrichtungen gemäss der beiden oben aufgeführten Dokumente weisen beide einen inneren Synchronring auf, der einen konischen Innenringkörper mit einer inneren Innenringfläche und einer äusseren Innenringfläche umfasst, die den Innenringkörper in einer zu der axialen Ringachse verlaufenden radialen Richtung jeweils begrenzen. Die innere Innenringfläche erstreckt sich dabei unter einem inneren Innenringwinkel und die äussere Innneringfläche unter einem äusseren Innenringwinkel zu der Ringachse. Der Unterschied beider Ausführungen besteht darin, dass bei der Synchonisiereinrichtung der DE 199 28 597 die innere Innenringfläche und die äussere Innenringfläche parallel zueinander angeordnet sind, wohingegen bei der Synchonisiereinrichtung der EP 1 312 823 A1 der innere Innenringwinkel grösser ist als der äussere Innenringwinkel, d.h die innere Innenringfläche und die äussere Innenringfläche verlaufen nicht parallel zueinander. Hierdurch wird gegenüber der Synchonisiereinrichtung der DE 199 28 597 erreicht, dass bei Fehlbedienung des Synchonisiereinrichtung, d.h insbesondere bei langandauerndem Vorsynchronisieren eines Ganges mit entsprechender Hitzeentwicklung, die Haltbarkeit der Synchonisiereinrichtung zu verbessern.

Der bereits bei Einfachsynchronisiereinrichtungen bekannte und in der EP 2677187 A1 beschriebene Konflikt, zwischen einer Erzielung einer hohen Schaltleistung bei gleichzeitig bestehendem hohen Schaltkomfort, besteht selbstverständlich auch bei der oben aufgezeigten Dreifachfachsynchronisiereinrichtung. Dieser Konflikt besteht darin, dass eine hohe Schaltleistung, d.h die Übertragung eines hohen Synchronisierungsmoments bei einer geringen Schaltkraft, durch einen kleinen Konuswinkel der Reibpaarung erreicht wird. Jedoch setzt der Selbsthemmungseffekt, der ein Lösen der Reibflächen verhindert und den Schaltkomfort substanziell und spürbar für den Fahrer beeinträchtigt, der Minimierung des Konuswinkels eine Grenze.

Gegenüber einer Zweifachsynchronisiereinrichtung ermöglichen sowohl die Synchronisiereinrichtung gemäss der DE 199 28 597 und EP 1 312 823 A1 die Übertragung eines höheren Synchronisierungsmoments bei einer akzeptablen Schaltqualität. An neuartige Dreifachsynchronisiereinrichtungen werden jedoch erhöhte Anforderungen an die Schaltleistung gestellt, bei gleichbleibender Schaltqualität und gleichbleibendem Bauraum.

Die Aufgabe der Erfindung besteht demnach darin, eine Mehrfachsynchronisiereinrichtung bereitzustellen, mittels welcher die Schaltleistung bei gleichbleibender Schaltqualität ohne vermehrten Bauraum erhöht werden kann.

Die diese Aufgabe lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Synchronisiereinrichtung für ein Zahnräderwechselgetriebe, die einen äußeren Synchronring, einen mittleren Synchronring und einen inneren Synchronring umfasst. Der mittlere Synchronring umfasst dabei mindestens einen ersten konischen Mittelringkörper mit einer ersten inneren Mittelringfläche und einer ersten äusseren Mittelringfläche, die den ersten Mittelringkörper in einer zu einer axialen Ringachse verlaufenden radialen Richtung jeweils begrenzen. Die erste innere Mittelringfläche erstreckt sich unter einem ersten inneren Mittelringwinkel und die erste äussere Mittelringfläche erstreckt sich unter einem ersten äusseren Mittelringwinkel zu der Ringachse.

Erfindungsgemäss sind der erste innere Mittelringwinkel und der erste äussere Mittelringwinkel unterschiedlich ausgebildet. D.h die Synchronisiereinrichtung weist wenigstens einen kleinen Winkel am mittleren Synchronring auf, der zur Übertragung eines hohen Synchronisierungsmoments beiträgt, was sich positiv auf die Schaltleistung und den Bauraum auswirkt. Gleichzeitig weisst die Synchronisiereinrichtung am mittleren Synchronring einen grossen Winkel auf, der zum Lösen des inneren und äusseren Synchronrings vom mittleren Synchronring beiträgt. Hierdurch wird die Selbsthemmung minimiert, was sich positiv auf die Schaltqualität auswirkt.

Im Rahmen dieser Erfindung stellt der "Betriebszustand" den Zustand des Synchronisiervorgangs dar, in welchem der äussere und der innere Synchronring in Richtung des zu synchronisierenden Gangrads verschoben sind. Im Betriebszustand sind der äussere und innere Synchronring mit dem mittleren Synchronring in Reibkontakt und erzeugen dabei kraftschlüssig ein Synchronisierungsmoment.

Zudem ist im Rahmen dieser Erfindung unter dem Begriff "Lösen" die Überführung der Synchronisiereinrichtung vom Betriebszustand in einen Nicht-Betriebszustand zu verstehen, wobei der Nicht-Betriebszustand den Zustand des Synchronisiervorgangs darstellt, in welchem der äussere und der innere Synchronring vom zu synchronisierenden Gangrad wegverschoben sind, d.h nicht in Eingriff mit dem mittleren Synchronring stehen und im wesentlichen kein Synchronisierungsmoment übertragen.

Um vom Nicht-Betriebszustand in den Betriebszustand zu gelangen und umgekehrt, weisen der innere, mittlere und äussere Synchronring die folgenden unterschiedliche Arten von Flächen auf: Reibfläche, Lösefläche und Reib/Lösefläche. Eine Reibfläche verläuft dabei unter einem kleinen Winkel, insbesondere unter einem Winkel von 3°-5°, zur axialen Ringachse und dient rein zur Übetragung des Synchronisierungsmoments und dissipiert die Reibenergie, die durch die Umwandlung der kinetischen Energie entsteht. Eine Lösefläche verläuft unter einem grossen Winkel, insbesondere unter einem Winkel von 6°-9°, zur axialen Ringachse und dient rein zum Lösen. Es findet keine nennenswerte Relativbewegung zwischen den kontaktierenden Flächen statt. Eine Reib/Lösefläche verläuft unter einem grossen Winkel zur axialen Ringachse und dient sowohl zur Übetragung des Synchronisierungsmoments wie auch zum Lösen.

Im Rahmen dieser Erfindung ist unter einer funktionalen Reibfläche eine Reibfläche oder eine Reib/Lösefläche zu verstehen. Ebenso ist im Rahmen dieser Erfindung unter einer funktionalen Lösefläche eine Lösefläche oder eine Reib/Lösefläche zu verstehen.

Bevorzugt, aber nicht notwendig, kann der erste innere Mittelringwinkel kleiner als der erste äussere Mittelringwinkel ausgebildet sein.

In einem für die Praxis sehr wichtigen Ausführungsbeispiel ist der mittlere Synchronring aus dem ersten konischen Mittelringkörper und einem zweiten konischen Mittelringkörper gebildet. Der zweite Mittelringkörper umfasst eine zweite innere Mittelringfläche und eine zweite äussere Mittelringfläche, die den zweiten Mittelringkörper in einer zu der axialen Ringachse verlaufenden radialen Richtung jeweils begrenzen. Die zweite innere Mittelringfläche erstreckt sich unter einem zweiten inneren Mittelringwinkel und die zweite äussere Mittelringfläche unter einem zweiten äusseren Mittelringwinkel zu der Ringachse, wobei der zweite innere Mittelringwinkel dem ersten äusseren Mittelringwinkel. Im Betriebszustand ist die zweite innere Mittelringfläche mit der ersten äusseren Mittelringfläche in Kontakt und die zweite äussere Mittelringfläche wirkt mit dem äusseren Synchronring zusammen.

Durch die zweiteilige Ausbildung des mittleren Synchronrings entsteht eine zusätzliche Lösefläche, wodurch das Lösen beim Übergang vom Betriebszustand in den Nicht-Betriebszustand erleichtert wird.

In einem bevorzugten Ausführungsbeispiel ist der innere Synchronring aus einem ersten konischen Innenringkörper und einem zweiten konischen Innenringkörper gebildet ist, wobei der erste Innenringkörper eine erste innere Innenringfläche und eine erste äussere Innenringfläche umfasst, die den ersten Innenringkörper in einer zu der axialen Reibringachse verlaufenden radialen Richtung jeweils begrenzen, wobei sich die erste innere Inennringfläche unter einem ersten inneren Innenringwinkel und die erste äussere Innenringfläche unter einem ersten äusseren Innenringwinkel zu der Reibringachse erstrecken, und der zweite Innenringkörper eine zweite innere Innenringfläche und eine zweite äussere Innenringfläche umfasst, die den zweiten Innenringkörper in einer zu der axialen Reibringachse verlaufenden radialen Richtung jeweils begrenzen, wobei sich die zweite innere Innenringfläche unter einem zweiten inneren Innenringwinkel und die zweite äussere Innenringfläche unter einem zweiten äusseren Innenringwinkel zu der Reibringachse erstrecken, wobei der zweite innere Innenringwinkel dem ersten äusseren Innenringwinkel, und im Betriebszustand die erste innere Innenringfläche mit dem zweiten Schaltelement zusammenwirkt, die zweite innere Innenringfläche mit der ersten äusseren Innneringfläche in Kontakt ist und die zweite äussere Innenringfläche mit der ersten inneren Mittelringfläche zusammenwirkt.

Auch durch die zweiteilige Ausbildung des inneren Synchronrings entsteht eine zusätzliche Lösefläche, wodurch das Lösen beim Übergang vom Betriebszustand in den Nicht-Betriebszustand erleichtert wird.

Auch hat es sich als vorteilhaft herausgestellt, wenn die Synchronisiereinrichtung einen Zwischensynchronring mit einem konischen Zwischenringkörper umfasst, wobei der Zwischenringkörper eine innere Zwischenringfläche und eine äussere Zwischenringfläche umfasst, die den Zwischenringkörper in einer zu der axialen Reibringachse verlaufenden radialen Richtung jeweils begrenzen, wobei sich die innere Zwischenringfläche unter einem inneren Zwischenringwinkel und die äussere Zwischenringfläche unter einem äusseren Zwischenringwinkel zu der Reibringachse erstreckt, wobei im Betriebszustand der Zwischensynchronring zwischen dem äusseren Synchronring und dem mittleren Synchronring angeordnet ist, und drehfest mit dem inneren Synchronring und dem äusseren Synchronring verbunden ist, wobei der innere Zwischenringwinkel dem ersten äusseren Mittelringwinkel und der äussere Zwischenringwinkel einem inneren Aussenringwinkel entspricht, so dass im Betriebszustand die innere Zwischenringfläche mit der ersten äusseren Mittelringfläche wenigstens teilweise formschlüssig verbunden ist, und die äussere Zwischenringfläche mit dem äusseren Synchronring zusammenwirkt. Auch durch den Zwischensynchronring entsteht eine zusätzliche Lösefläche, wodurch das Lösen beim Übergang vom Betriebszustand in den Nicht-Betriebszustand erleichtert wird.

Zudem ist es zur Übertragung eines hohen Synchronisierungsmoments von Vorteil, wenn der erste innere Innenringwinkel und/oder der erste äussere Innenringwinkel und/oder der zweite äussere Innenringwinkel und/oder der erste innere Mittelringwinkel und/oder der erste äussere Mittelringwinkel und/oder der zweite äussere Mittelringwinkel und/oder der innere Zwischenringwinkel und/oder der äussere Zwischenringwinkel 3°-5° beträgt. Um eine sichere Überführung der Synchronsiereinrichtung vom Betriebszustand in den Nicht- Betriebszustand zu gewährleisten, ist der erste Innenringkörper und/oder der zweite Innenringkörper und/oder der erste Mittelringkörper und/oder der zweite Mittelringkörper und/oder der Zwischenringkörper in einer zu der axialen Ringachse verlaufenden Umfangsrichtung eine Trennstelle aufweist. Im Nicht-Betriebszustand ist die Trennstelle offen oder geschlossen.

Auch hat es sich in der Praxis als vorteilhaft erwiesen, wenn der erste Innenringkörper und/oder der zweite Innenringkörper und/oder der erste Mittelringkörper und/oder der zweite Mittelringkörper und/oder der Zwischenringkörper wenigstens einen Anschlag zur axialen Fixierung in Richtung der Reibringachse aufweist.

Auch hat es sich zur Übertragung eines hohen Synchronisiermoments als vorteilhaft gezeigt, wenn an der ersten inneren Innenringfläche und/oder an der ersten äusseren Innenringfläche und/oder an der zweiten inneren Innenringfläche und/oder an der zweiten äusseren Innenringfläche und/oder an der ersten inneren Mittelringfläche und/oder an der ersten äusseren Mittelringfläche und/oder an der zweiten inneren Mittelringfläche und/oder an der zweiten äusseren Mittelringfläche und/oder an der inneren Zwischenringfläche und/oder an der äusseren Zwischenringfläche eine Reibbeschichtung, insbesondere ein Reibbeschichtung in Form eines Karbon Reibbelags vorgesehen ist.

Schliesslich ist es von Vorteil, wenn an der ersten inneren Innenringfläche und/oder an der ersten äusseren Innenringfläche und/oder an der zweiten inneren Innenringfläche und/oder an der zweiten äusseren Innenringfläche und/oder an der ersten inneren Mittelringfläche und/oder an der ersten äusseren Mittelringfläche und/oder an der zweiten inneren Mittelringfläche und/oder an der zweiten äusseren Mittelringfläche und/oder an der inneren Zwischenringfläche und/oder an der äusseren Zwischenringfläche eine adhäsionsvermindernde Oberflächenstruktur vorgesehen ist. Hierdurch ist eine sichere Überführung der Synchronsiereinrichtung vom Betriebszustand in den Nicht- Betriebszustand gewährleistet.

Im Folgenden wird die Erfindung an Hand der schematischen Zeichnung näher erläutert. Dabei zeigen:
- Fig. 1: einen Querschnitt einer bekannten Synchronisiereinrichtung;
- Fig. 2a: einen Querschnitt eines ersten Ausführungsbeispiels einer erfindungsgemässen Synchronisiereinrichtung mit zwei funktionalen Reibflächen;
- Fig. 2b: einen Querschnitt eines zweiten Ausführungsbeispiels einer erfindungsgemässen Synchronisiereinrichtung mit zwei funktionalen Reibflächen;
- Fig. 2c: einen Querschnitt eines dritten Ausführungsbeispiels einer erfindungsgemässen Synchronisiereinrichtung mit zwei funktionalen Reibflächen;
- Fig. 2d: einen Querschnitt eines vierten Ausführungsbeispiels einer erfindungsgemässen Synchronisiereinrichtung mit zwei funktionalen Reibflächen;
- Fig. 3a: einen Querschnitt eines ersten Ausführungsbeispiels einer erfindungsgemässen Synchronisiereinrichtung mit drei funktionalen Reibflächen;
- Fig. 3b: einen Querschnitt eines zweiten Ausführungsbeispiels einer erfindungsgemässen Synchronisiereinrichtung mit drei funktionalen Reibflächen;
- Fig. 3c: einen Querschnitt eines dritten Ausführungsbeispiels einer erfindungsgemässen Synchronisiereinrichtung mit drei funktionalen Reibflächen;
- Fig. 3d: einen Querschnitt eines vierten Ausführungsbeispiels einer erfindungsgemässen Synchronisiereinrichtung mit drei funktionalen Reibflächen;
- Fig. 3e: einen Querschnitt eines fünften Ausführungsbeispiels einer erfindungsgemässen Synchronisiereinrichtung mit drei funktionalen Reibflächen;
- Fig. 3f: einen Querschnitt eines sechstens Ausführungsbeispiels einer erfindungsgemässen Synchronisiereinrichtung mit drei funktionalen Reibflächen;

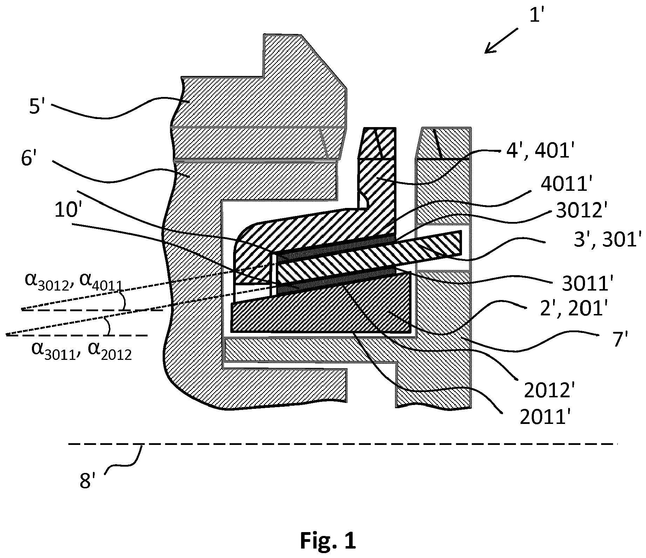

Zur Erläuterung einer bekannten Synchronisiereinrichtung wird im Folgenden auf Fig. 1 Bezug genommen. Zur Unterscheidung des Standes der Technik von der vorliegenden Erfindung sind die Bezugszeichen, die sich auf Merkmale einer bekannten Synchronisiereinrichtung beziehen mit einem Hochkomma versehen, während Merkmale erfindungsgemässer Ausführungsbeispiele mit Bezugszeichen versehen sind, die kein Hochkomma tragen.

Fig.1 zeigt einen Querschnitt einer bekannten Synchronisiereinrichtung 1' umfassend eine inneren Synchronring 2', einen mittleren Synchronring 3' und einen äusseren Synchronring 4'. Die Synchronisiereinrichtung 1' weist zudem in an sich bekannter Weise weiter eine Schiebemuffe 5' mit einem Synchronkörper 6' und ein Gangrad 7' auf. Der äußere Synchronring 4' und der innere Synchronring 2' sind mit dem Synchronkörper 6' im wesentlichen drehfest verbunden, und der mittlere Synchronring 3' ist mit dem Gangrad 7' im wesentlichen drehfest verbunden. Die vorgenannten Komponenten sind derart koaxial zu einer Ringachse 8' angeordnet, so dass während des Synchronisierungsvorgangs der innere Synchronring 2' und der äussere Synchronring 4' durch die Schiebemuffe 5' gemeinsam entlang der Ringachse 8' in Richtung zum Gangrad 7' verschiebbar sind, so dass der innere Synchronring 2' und der äussere Synchronring 4' mit dem Gangrad 7' in Eingriff bringbar ist.

Der mittlere Synchronring 3' umfasst einen ersten konischen Mittelringkörper 301' mit einer ersten inneren Mittelringfläche 3011' und einer ersten äusseren Mittelringfläche 3012', die den ersten Mittelringkörper 301' in einer zu der axialen Ringachse 8' verlaufenden radialen Richtung jeweils begrenzen. Die erste innere Mittelringfläche 3011' erstreckt sich unter einem ersten inneren Mittelringwinkel α_{3011'} und die erste äussere Mittelringfläche 3012' erstreckt sich unter einem ersten äusseren Mittelringwinkel α_{3012'} zu der Ringachse 8', wobei der erste innere Mittelringwinkel α_{3011'} und der erste äussere Mittelringwinkel α_{3012'} gleich gross ausgebildet sind, d.h die erste innere Mittelringfläche 3011' und die erste äussere Mittelringfläche 3012' verlaufen parallel zueinander.

Der innere Synchronring 2' umfasst einen ersten konischen Innenringkörper 201' mit einer ersten inneren Innenringfläche 2011' und einer ersten äusseren Innenringfläche 2012', die den ersten Innenringkörper 201' in der zu der axialen Ringachse 8' verlaufenden radialen Richtung jeweils begrenzen. Die erste innere Innenringfläche 2011' erstreckt sich unter einem ersten inneren Innenringwinkel α_{2011'} und die erste äussere Inennringfläche 2012' erstreckt sich unter einem ersten äusseren Inennringwinkel α_{2012'} zu der Ringachse 8', wobei der erste innere Innenringwinkel α_{2011'} Null Grad beträgt und der erste äussere Innenringwinkel α_{2012'} gleich gross wie der erste innere Mittelringwinkel α_{3011'} ausgebildet ist.

Der äussere Synchronring 4' umfasst einen Aussenringkörper 401' mit einer inneren Aussenringfläche 4011', die sich unter einem inneren Aussenringwinkel α_{4011'} zu der Ringachse 8' erstreckt, wobei der innere Aussenringwinkel α_{4011'} gleich gross wie der erste äussere Mittelringwinkel α_{3012'} ausgebildet ist.

Der innere und äussere Synchronring 2',4' sind demnach so ausgestaltet und angeordnet, dass bei einem Synchronisiervorgang, bei welchem der innere und äussere Synchronring 2',4' in Richtung des zu synchronisierenden Gangrads 7' verschoben wird, die erste innere Mittelringfläche 3011' mit der ersten äusseren Innenringfläche 2012' in Reibkontakt steht und die erste äussere Mittelringfläche 3012' unmittelbar mit der inneren Aussenringfläche 4011' in Reibkontakt steht. Hierzu weisen die in Reibkontakt stehenden Flächen, nämlich die erste äussere Innenringfläche 2012' und die erste innere Mittelringfläche 3011' bzw. die erste äussere Mittelringfläche 3012' und die innere Aussenringfläche 4011' eine Reibbeschichtung 10' auf. Damit eine Überführung vom Betriebszustand in den Nicht-Betriebszustand sicher erfolgen kann, sind der erste innere Mittelringwinkel α_{3011'} und der erste äussere Mittelringwinkel α_{3012'} als grosse Winkel ausgebildet. D.h es handelt sich bei der Synchronisiereinrichtung aus dem Stand der Technik um eine Konfiguration einer Synchronisiereinrichtung mit zwei Reib/Löseflächen.

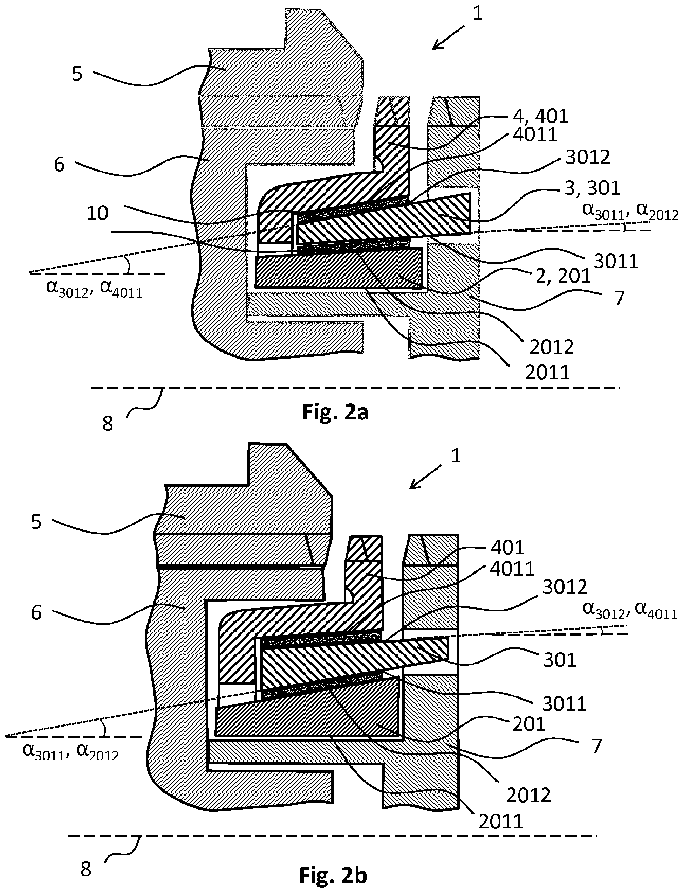

Fig.2a zeigt einen Querschnitt eines ersten Ausführungsbeispiels einer erfindungsgemässen Synchronisiereinrichtung 1 mit zwei funktionalen Reibflächen.

Die Synchronisiereinrichtung 1 umfasst einen inneren Synchronring 2, einen mittleren Synchronring 3 und einen äusseren Synchronring 4. Die Synchronisiereinrichtung 1 weist zudem wie bereits oben in Bezug auf Fig.1 beschrieben weiter eine Schiebemuffe 5 mit einem Synchronkörper 6 und ein Gangrad 7 auf. Der äußere Synchronring 4 und der innere Synchronring 2 sind mit dem Synchronkörper 6 im wesentlichen drehfest verbunden, und der mittlere Synchronring 3 ist mit dem Gangrad 7 im wesentlichen drehfest verbunden. Die vorgenannten Komponenten sind derart koaxial zu einer Ringachse 8 angeordnet, dass während des Synchronisierungsvorgangs der innere Synchronring 2 und der äussere Synchronring 4 durch die Schiebemuffe 5 gemeinsam entlang der Ringachse 8 in Richtung zum Gangrad 7 verschiebbar sind, so dass der innere Synchronring 2 und der äussere Synchronring 4 mit dem Gangrad 7 in Eingriff bringbar ist.

Der mittlere Synchronring 3 umfasst einen ersten konischen Mittelringkörper 301 mit einer ersten inneren Mittelringfläche 3011 und einer ersten äusseren Mittelringfläche 3012, die den ersten Mittelringkörper 301 in einer zu der axialen Ringachse 8 verlaufenden radialen Richtung jeweils begrenzen. Die erste innere Mittelringfläche 3011 erstreckt sich unter einem ersten inneren Mittelringwinkel α₃₀₁₁ und die erste äussere Mittelringfläche 3012 erstreckt sich unter einem ersten äusseren Mittelringwinkel α₃₀₁₂ zu der Ringachse 8, wobei im Unterschied zur Synchronisiereinrichtung 1 aus dem Stand der Technik (Fig.1) der erste innere Mittelringwinkel α₃₀₁₁ und der erste äussere Mittelringwinkel α₃₀₁₂ unterschiedlich gross ausgebildet sind, d.h die erste innere Mittelringfläche 3011 und die erste äussere Mittelringfläche 3012 verlaufen nicht parallel zueinander. In diesem Ausführungsbeispiel ist der erste innere Mittelringwinkel α₃₀₁₁ 3° und der erste äussere Mittelringwinkel α₃₀₁₂ 7°.

Der innere Synchronring 2 umfasst einen ersten konischen Innenringkörper 201 mit einer ersten inneren Innenringfläche 2011 und einer ersten äusseren Innenringfläche 2012, die den ersten Innenringkörper 201 in der zu der axialen Ringachse 8 verlaufenden radialen Richtung jeweils begrenzen. Die erste innere Innenringfläche 2011 erstreckt sich unter einem ersten inneren Innenringwinkel α₂₀₁₁ und die erste äussere Inennringfläche 2012 erstreckt sich unter einem ersten äusseren Inennringwinkel α₂₀₁₂ zu der Ringachse 8, wobei der erste innere Innenringwinkel α₂₀₁₁ Null Grad beträgt und der erste äussere Innenringwinkel α₂₀₁₂ gleich gross wie der erste innere Mittelringwinkel α₃₀₁₁ ausgebildet ist.

Der äussere Synchronring 4 umfasst einen Aussenringkörper 401 mit einer inneren Aussenringfläche 4011, die sich unter einem inneren Aussenringwinkel α₄₀₁₁ zu der Ringachse 8 erstreckt, wobei der innere Aussenringwinkel α₄₀₁₁ gleich gross wie der erste äussere Mittelringwinkel α₃₀₁₂ ausgebildet ist.

Der innere und äussere Synchronring 2,4 sind demnach so ausgestaltet und angeordnet, dass bei einem Synchronisiervorgang, bei welchem der innere und äussere Synchronring 2,4 in Richtung des zu synchronisierenden Gangrads 7 verschoben wird, die erste innere Mittelringfläche 3011 mit der ersten äusseren Innenringfläche 2012 in Reibkontakt steht und die erste äussere Mittelringfläche 3012 unmittelbar mit der inneren Aussenringfläche 4011 in Reibkontakt steht. Hierzu weisen die in Reibkontakt stehenden Flächen, nämlich die erste äussere Innenringfläche 2012 und die erste innere Mittelringfläche 3011 bzw. die erste äussere Mittelringfläche 3012 und die innere Aussenringfläche 4011 eine Reibbeschichtung 10 auf.

Diese erste erfindungsgemässe Ausführungsform der Synchronisiereinrichtung 1 ist dadurch gekennzeichnet, dass sie eine Reibfläche aufweist, d.h eine Fläche, die unter einem kleinen Winkel zur axialen Ringachse 8 verläuft und rein zur Übetragung des Synchronisierungsmoments dient, und eine Reib/Lösefläche aufweist, die unter einem grossen Winkel zur axialen Ringachse 8 verläuft und sowohl zur Übetragung des Synchronisierungsmoments wie auch zum Lösen dient. Hierdurch kann im Vergleich zum Stand der Technik ein erhöhtes Synchronisierungsmoments bei gleicher Schaltqualität übertragen werden.

Fig.2b zeigt einen Querschnitt eines zweiten Ausführungsbeispiels einer erfindungsgemässen Synchronisiereinrichtung 1 mit zwei funktionalen Reibflächen. Im Unterscheid zu der Synchronisiereinrichtung 1 aus Fig.2a ist der erste innere Mittelringwinkel α₃₀₁₁ gross (7°) ausgebildet und der erste äussere Mittelringwinkel α₃₀₁₂ klein (3°) ausgebildet. Dementsprechend sind auch der äussere Innenringwinkel α₂₀₁₂ gross und der innere Aussenringwinkel α₄₀₁₁ klein ausgebildet.

Wie die Ausführungsform nach Fig.2a hat auch diese Ausführungsform eine Reibfläche und eine Reib/Lösefläche.

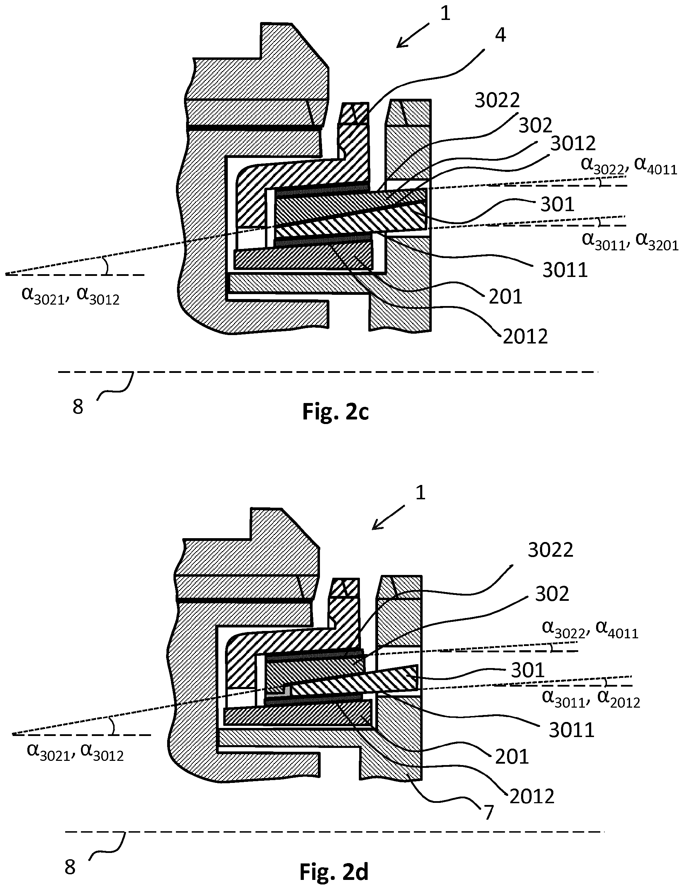

Fig.2c zeigt einen Querschnitt eines dritten Ausführungsbeispiels einer erfindungsgemässen Synchronisiereinrichtung 1 mit zwei funktionalen Reibflächen. Im Unterschied zu der Synchronisiereinrichtung 1 aus Fig.2a und Fig.2b weist die Synchronisiereinrichtung 1 gemäss Fig.2c einen zweiteiligen mittleren Synchronring 3 auf, d.h der mittlere Synchronring 3 ist aus einem ersten konischen Mittelringkörper 301 und einem zweiten konischen Mittelringkörper 302 gebildet. Der zweite Mittelringkörper 302 umfasst eine zweite innere Mittelringfläche 3021 und eine zweite äussere Mittelringfläche 3022, die den zweiten Mittelringkörper 302 in der zu der axialen Ringachse 8 verlaufenden radialen Richtung jeweils begrenzen. Die zweite innere Mittelringfläche 3021 erstreckt sich unter einem zweiten inneren Mittelringwinkel α₃₀₂₁ und die zweite äussere Mittelringfläche 3022 unter einem zweiten äusseren Mittelringwinkel α₃₀₂₂ zu der Ringachse 8. Dabei entspricht der zweite innere Mittelringwinkel α₃₀₂₁ dem ersten äusseren Mittelringwinkel α₃₀₁₂ und der zweite äussere Mittelringwinkel α₃₀₂₂ dem ersten inneren Mittelringwinkel α₃₀₁₁. Im Betriebszustand ist die zweite innere Mittelringfläche 3021 mit der ersten äusseren Mittelringfläche 3012 formschlüssig verbunden und die zweite äussere Mittelringfläche 3022 wirkt mit dem äusseren Synchronring 4 zusammen.

In diesem Ausführungsbeispiel sind der erste innere Mittelringwinkel α₃₀₁₁ und der zweite äussere Mittelringwinkel α₃₀₂₂ klein ausgebildet, wohingegen der erste äussere Mittelringwinkel α₃₀₁₂ und der zweite innere Mittelringwinkel α₃₀₂₁ gross ausgebildet sind.

Die Synchronisiereinrichtung 1 gemäss Fig.2c hat demnach zwei Reibflächen und eine Lösefläche.

Fig.2d zeigt einen Querschnitt eines vierten Ausführungsbeispiels einer erfindungsgemässen Synchronisiereinrichtung 1 mit zwei funktionalen Reibflächen.

Im Unterschied zu der Synchronisiereinrichtung 1 gemäss Fig. 2c ist bei der Synchronisiereinrichtung 1 gemäss Fig.2d der zweite Mittelringkörper 302 über den ersten Mittelringkörper 301 im wesentlichen drehfest mit dem Gangrad 7 verbunden. Dadurch ist im Unterschied zu der Synchronisiereinrichtung 1 gemäss Fig. 2c im Betriebszustand die zweite innere Mittelringfläche 3021 mit der ersten äusseren Mittelringfläche 3012 lediglich teilweise formschlüssig verbunden.

Wie bei dem Ausführungsbeispiel gemäss Fig.2c sind auch bei diesem Ausführungsbeispiel der erste innere Mittelringwinkel α₃₀₁₁ und der zweite äussere Mittelringwinkel α₃₀₂₂ klein ausgebildet, wohingegen der erste äussere Mittelringwinkel α₃₀₁₂ und der zweite innere Mittelringwinkel α₃₀₂₁ gross ausgebildet sind.

Somit weist auch die Synchronisiereinrichtung 1 gemäss Fig.2d zwei Reibflächen und eine Lösefläche auf.

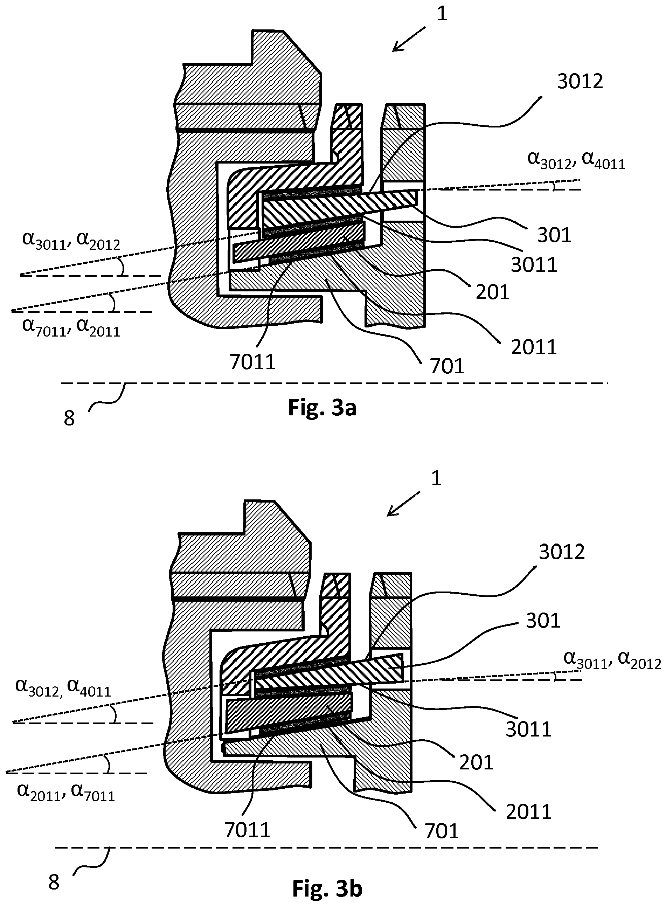

Fig.3a-3g zeigen Querschnitte weiterer erfindungsgemässer Synchronisiereinrichtungen 1 mit drei funktionalen Reibflächen.

Bei all diesen Synchronisiereinrichtungen 1 weist das Gangrad 7 einen konischen Gangradansatz 701 auf, so dass im Betriebszustand ein Synchronisiermoment auf den inneren Synchronring 2 übertragen werden kann. Der Gangradansatz 701 weist dabei eine Gangradansatzfläche 7011 auf, die unter einem Gangradansatzwinkel α₇₀₁₁ zur Ringachse 8 verläuft.

Fig.3a zeigt einen Querschnitt eines ersten Ausführungsbeispiels einer erfindungsgemässen Synchronisiereinrichtung 1 mit drei funktionalen Reibflächen.

Wie bei dem Ausführungsbeispiel gemäss Fig.2b weist die Synchronisiereinrichtung 1 einen mittleren Synchronring 3 auf, dessen erster innerer Mittelringwinkel α₃₀₁₁ gross und dessen erster äusserer Mittelringwinkel α₃₀₁₂ klein ausgebildet ist.

Im Unterschied zu dem Ausführungsbeispiel gemäss Fig.2b ist der innere Innenringwinkel α₂₀₁₁ und der äussere Innenringwinkel α₂₀₁₂ gleich gross ausgebildet, d.h die innere Innenringfläche 2011 und die äussere Innenringfläche 2012 verlaufen parallel zueinander. Dadurch verläuft im Unterschied zum Ausführungsbeispiel gemäss Fig.2b die innere Innenringfläche 2011 unter einem grossen inneren Innenringwinkel α₂₀₁₁, d.h der innere Innenringwinkel α₂₀₁₁ ist nicht Null Grad. Der innere Innenringwinkel α₂₀₁₁ entspricht dabei dem Gangradansatzwinkel α₇₀₁₁, so dass im Betriebszustand die innere Innenringfläche 2011 und die Gangradansatzfläche 7011 zusammenwirken.

Die Synchronisiereinrichtung 1 gemäss Fig.3a weist eine Reibfläche und zwei Reib/ Löseflächen auf.

Fig.3b zeigt einen Querschnitt eines zweiten Ausführungsbeispiels einer erfindungsgemässen Synchronisiereinrichtung 1 mit drei funktionalen Reibflächen.

Wie bei dem Ausführungsbeispiel gemäss Fig.2a weist die Synchronisiereinrichtung 1 einen mittleren Synchronring 3 auf, dessen erster innerer Mittelringwinkel α₃₀₁₁ klein und dessen erster äusserer Mittelringwinkel α₃₀₁₂ gross ausgebildet ist.

Im Unterschied zu dem Ausführungsbeispiel gemäss Fig.2a verläuft die innere Innenringfläche 2011 unter einem grossen inneren Innenringwinkel α₂₀₁₁, d.h der innere Innenringwinkel α₂₀₁₁ ist nicht Null Grad. Der innere Innenringwinkel α₂₀₁₁ entspricht dabei dem Gangradansatzwinkel α₇₀₁₁, so dass im Betriebszustand die innere Innenringfläche 2011 und die Gangradansatzfläche 7011 zusammenwirken.

Wie die Synchronisiereinrichtung 1 gemäss Fig.3a weist auch die Synchronisiereinrichtung 1 gemäss Fig.3b eine Reibfläche und zwei Reib/ Löseflächen auf.

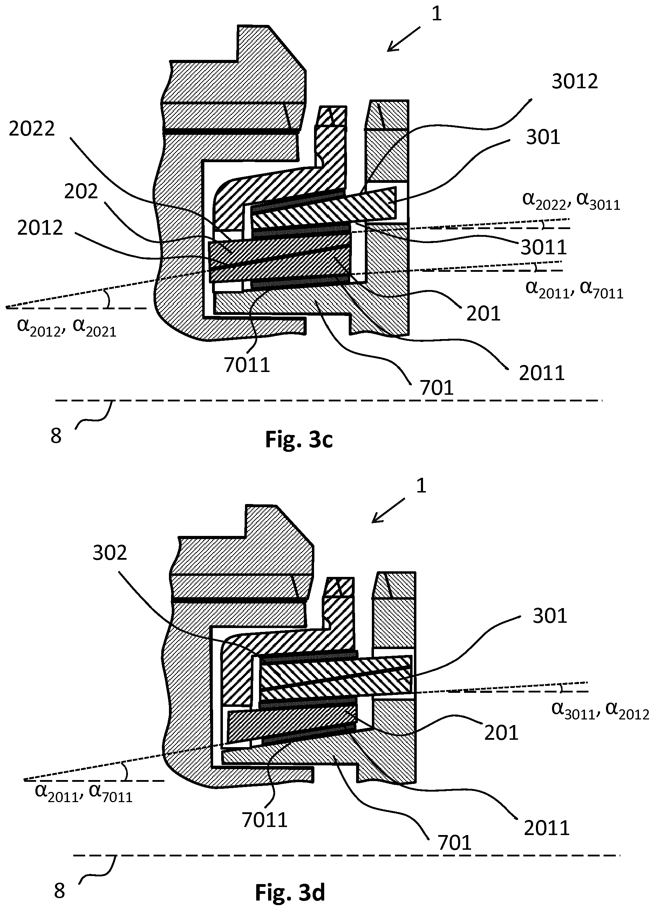

Fig.3c zeigt einen Querschnitt eines dritten Ausführungsbeispiels einer erfindungsgemässen Synchronisiereinrichtung 1 mit drei funktionalen Reibflächen.

Wie bei dem Ausführungsbeispiel gemäss Fig.3b weist die Synchronisiereinrichtung 1 einen mittleren Synchronring 3 auf, dessen erster innerer Mittelringwinkel α₃₀₁₁ klein und dessen erster äusserer Mittelringwinkel α₃₀₁₂ gross ausgebildet ist.

Im Unterschied zu der Synchronisiereinrichtung 1 aus Fig.3b weist die Synchronisiereinrichtung 1 gemäss Fig.3c einen zweiteiligen inneren Synchronring 2 auf, d.h der innere Synchronring 2 ist aus einem ersten konischen Innenringkörper 201 und einem zweiten konischen Innenringkörper 202 gebildet.

Der erste Innenringkörper 201 weist eine erste innere Innenringfläche 2011 und eine erste äussere Innenringfläche 2012 auf, die den ersten Innenringkörper 201 in einer zu der axialen Ringachse 8 verlaufenden radialen Richtung jeweils begrenzen, wobei sich die erste innere Innenringfläche 2011 unter einem ersten inneren Innenringwinkel α₂₀₁₁ und die erste äussere Innenringfläche 2012 unter einem ersten äusseren Innenringwinkel α₂₀₁₂ zu der Ringachse 8 erstrecken. Der zweite Innenringkörper 202 weist eine zweite innere Innenringfläche 2021 und eine zweite äussere Innenringfläche 2022 auf, die den zweiten Innenringkörper 202 in einer zu der axialen Ringachse 8 verlaufenden radialen Richtung jeweils begrenzen, wobei sich die zweite innere Innenringfläche 2021 unter einem zweiten inneren Innenringwinkel α₂₀₂₁ und die zweite äussere Innenringfläche 2022 unter einem zweiten äusseren Innenringwinkel α₂₀₂₂ zu der Ringachse 8 erstrecken. Der zweite innere Innenringwinkel α₂₀₂₁ entspricht dabei dem ersten äusseren Innenringwinkel α₂₀₁₂ und der zweite äussere Innenringwinkel α₂₀₂₂ dem ersten inneren Innenringwinkel α₂₀₁₁. Im Betriebszustand wirkt die erste innere Innenringfläche 2011 mit dem Gangrad 7 zusammen und die zweite innere Innenringfläche 2021 ist mit der ersten äusseren Innneringfläche 2012 formschlüssig verbunden. Gleichzeitig wirkt die zweite äussere Innenringfläche 2022 mit der ersten inneren Mittelringfläche 3011 zusammen.

Dabei sind der erste innere Innenringwinkel α₂₀₁₁ und der Gangradansatzwinkel α₇₀₁₁ als kleine Winkel ausgebildet. Gleichzeitig sind auch der zweite äussere Innenringwinkel α₂₀₂₂ und der erste innere Mittelringwinkel α₃₀₁₁ als kleine Winkel ausgebildet.

Die Synchronisiereinrichtung 1 gemäss Fig.3c weist somit zwei Reibflächen, eine Reib/ Lösefläche und eine Lösefläche auf.

Fig.3d zeigt einen Querschnitt eines vierten Ausführungsbeispiels einer erfindungsgemässen Synchronisiereinrichtung 1 mit drei funktionalen Reibflächen.

Wie bei dem Ausführungsbeispiel gemäss Fig.2c weist der mittlere Synchronring 3 neben dem ersten mittleren Synchronringkörper 301 einen zweiten mittleren Synchronringkörper 302 auf.

Im Unterschied zu dem Ausführungsbeispiel gemäss Fig.2c verläuft die innere Innenringfläche 2011 unter einem grossen inneren Innenringwinkel α₂₀₁₁, d.h der innere Innenringwinkel α₂₀₁₁ ist nicht Null Grad. Der innere Innenringwinkel α₂₀₁₁ entspricht dabei dem Gangradansatzwinkel α₇₀₁₁, so dass im Betriebszustand die innere Innenringfläche 2011 und die Gangradansatzfläche 7011 zusammenwirken.

Wie die Synchronisiereinrichtung 1 gemäss Fig.3c weist auch die Synchronisiereinrichtung 1 gemäss Fig.3d zwei Reibflächen, eine Reib/ Lösefläche und eine Lösefläche auf.

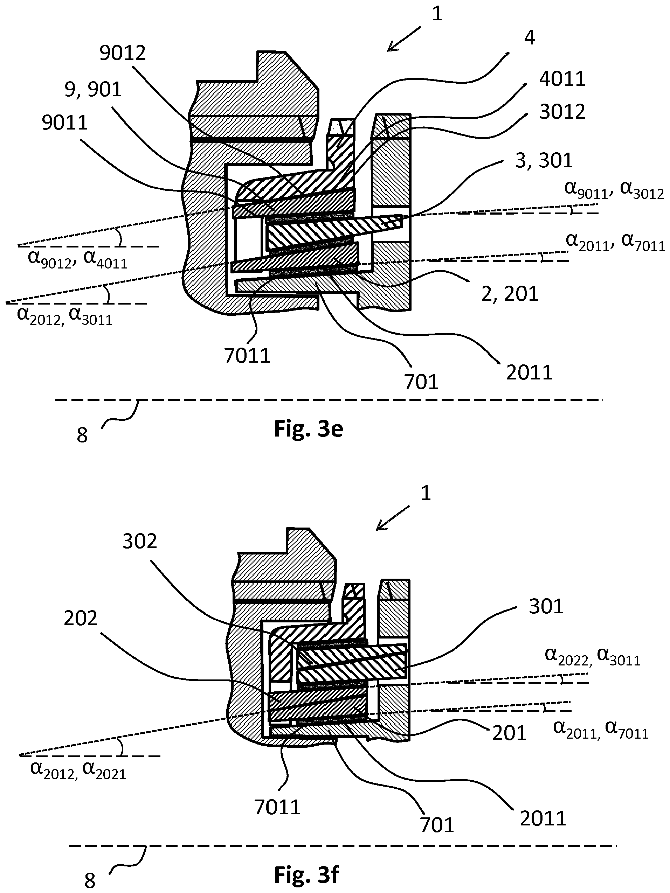

Fig.3e zeigt einen Querschnitt eines fünften Ausführungsbeispiels einer erfindungsgemässen Synchronisiereinrichtung 1 mit drei funktionalen Reibflächen.

Im Unterschied zu den Synchronisiereinrichtungen 1 aus Fig.3a-3d weist die Synchronisiereinrichtung 1 gemäss Fig.3e einen zusätzlichen Zwischensynchronring 9 mit einem konischen Zwischenringkörper 901 auf. Der Zwischenringkörper 901 hat eine innere Zwischenringfläche 9011 und eine äussere Zwischenringfläche 9012, die den Zwischenringkörper 901 in einer zu der axialen Reibringachse 8 verlaufenden radialen Richtung jeweils begrenzen. Die innere Zwischenringfläche 9011 erstreckt sich unter einem inneren Zwischenringwinkel α₉₀₁₁ und die äussere Zwischenringfläche 9012 unter einem äusseren Zwischenringwinkel α₉₀₁₂ zu der Ringachse 8. Dabei ist in diesem Ausführungsbeispiel der innere Zwischenringwinkel α₉₀₁₁ klein und der äussere Zwischenringwinkel α₉₀₁₂ gross ausgebildet. Im Betriebszustand ist der Zwischensynchronring 9 zwischen dem äusseren Synchronring 4 und dem mittleren Synchronring 3 angeordnet und drehfest mit dem inneren Synchronring 2 und dem äusseren Synchronring 4 verbunden. Der innere Zwischenringwinkel α₉₀₁₁ entspricht dem ersten äusseren Mittelringwinkel α₃₀₁₂ und der äussere Zwischenringwinkel α₉₀₁₂ dem inneren Aussenringwinkel α₄₀₁₁. Dadurch wirkt im Betriebszustand die innere Zwischenringfläche 9011 mit der ersten äusseren Mittelringfläche 3012 zusammen, und die äussere Zwischenringfläche 9012 ist mit dem äusseren Synchronring 4 wenigstens teilweise formschlüssig verbunden.

Die innere Innenringfläche 2011 verläuft unter einem kleinen inneren Innenringwinkel α₂₀₁₁. Der innere Innenringwinkel α₂₀₁₁ entspricht dabei dem Gangradansatzwinkel α₇₀₁₁, so dass im Betriebszustand die innere Innenringfläche 2011 und die Gangradansatzfläche 7011 zusammenwirken. Gleichzeitig verläuft die äussere Innenringfläche 2012, die im Betriebszustand mit der ersten inneren Mittelringfläche 3011 zusammenwirkt, unter einem grossen äusseren Innenringwinkel α₂₀₁₂.

Wie die Synchronisiereinrichtung 1 gemäss Fig.3c und Fig.3d weist auch die Synchronisiereinrichtung 1 gemäss Fig.3e zwei Reibflächen, eine Reib/ Lösefläche und eine Lösefläche auf.

Fig.3f zeigt einen Querschnitt eines sechsten Ausführungsbeispiels einer erfindungsgemässen Synchronisiereinrichtung 1 mit drei funktionalen Reibflächen.

Wie die Synchronisiereinrichtung 1 gemäss Fig.2c weist auch die Synchronisiereinrichtung 1gemäss Fig.3f einen zweiteiligen mittleren Synchronring 3 auf, d.h der mittlere Synchronring 3 ist aus einem ersten konischen Mittelringkörper 301 und einem zweiten konischen Mittelringkörper 302 gebildet.

Im Unterschied zu der Synchronisiereinrichtung 1 gemäss Fig.2c ist auch der innere Synchronring 2 zweiteilig ausgebildet, d.h der innere Synchronring 2 umfasst einen ersten konischen Innenringkörper 201 und einen zweiten konischen Innenringkörper 202 wie bereits bei der Synchronisiereinrichtung 1 gemäss Fig.3c beschrieben.

Die erste innere Innenringfläche 2011 verläuft unter einem kleinen inneren Innenringwinkel α₂₀₁₁. Der erste innere Innenringwinkel α₂₀₁₁ entspricht dabei dem Gangradansatzwinkel α₇₀₁₁, so dass im Betriebszustand die erste innere Innenringfläche 2011 und die Gangradansatzfläche 7011 zusammenwirken. Ebenfalls verläuft die zweite äussere Innenringfläche 2022, die im Betriebszustand mit der ersten inneren Mittelringfläche 3011 zusammenwirkt, unter einem kleinen äusseren Innenringwinkel α₂₀₂₂.

Die Synchronisiereinrichtung 1 weist somit drei Reibflächen und zwei Löseflächen auf.

Bei allen oben aufgeführten Ausführungsbeispielen kann an den Flächen, die im Betriebszustand miteinander in Kontakt stehen, einseitig und/oder beidseitig eine Reibbeschichtung 10 vorgesehen sein. Auch ist es möglich, dass an den Flächen, die nicht als Reibflächen dienen (Löseflächen), eine adhäsionsvermindernde Oberflächenstruktur vorgesehen ist.

Erfindungsgemäss ist in allen oben beschriebenen Ausführungsbeispielen der erste Innenringkörper 201 und/oder der zweite Innenringkörper 202 und/oder der erste Mittelringkörper 301 und/oder der zweite Mittelringkörper 302 und/oder der Zwischenringkörper 901 in einer senkrecht zur axialen Ringachse 8 verlaufenden Umfangsrichtung eine Trennstelle aufweist, wobei im Nicht-Betriebszustand die Trennstelle entweder offen oder geschlossen ist. Schliesslich kann in allen oben beschriebenen Ausführungsbeispielen der erste Innenringkörper 201 und/oder der zweite Innenringkörper 202 und/oder der erste Mittelringkörper 301 und/oder der zweite Mittelringkörper 302 und/oder der Zwischenringkörper 901 wenigstens einen Anschlag zur Fixierung in Richtung der Ringachse 8 aufweisen.

## Patentansprüche

1. Synchronisiereinrichtung (1) für ein Zahnräderwechselgetriebe eines Kraftfahrzeuges, umfassend einen inneren Synchronring (2), einen mittleren Synchronring (3) und einen äußeren Synchronring (4), wobei im Betriebszustand der äußere Synchronring (4) und der innere Synchronring (2) mit einem ersten Schaltelement (6) im wesentlichen drehfest verbunden sind, und im Betriebszustand der mittlere Synchronring (3) mit einem zweiten Schaltelement (7) im wesentlichen drehfest verbunden ist, und wobei der mittlere Synchronring (3) einen ersten konischen Mittelringkörper (301) mit einer ersten inneren Mittelringfläche (3011) und einer ersten äusseren Mittelringfläche (3012) umfasst, die den ersten Mittelringkörper (301) in einer zu einer axialen Ringachse (8) verlaufenden radialen Richtung jeweils begrenzen, wobei sich die erste innere Mittelringfläche (3011) unter einem ersten inneren Mittelringwinkel (α₃₀₁₁) und die erste äussere Mittelringfläche (3012) unter einem ersten äusseren Mittelringwinkel (α₃₀₁₂) zu der Ringachse (8) erstrecken, und im Betriebszustand die erste innere Mittelringfläche (3011) mit dem inneren Synchronring (2) zusammenwirkt und die erste äussere Mittelringfläche (3012) unmittelbar oder mittelbar mit dem äusseren Synchronring (4) zusammenwirkt, wobei der erste innere Mittelringwinkel (α₃₀₁₁) und der erste äussere Mittelringwinkel (α₃₀₁₂) unterschiedlich ausgebildet sind, **dadurch gekennzeichnet, dass** ein erster konischer Innenringkörper (201) des inneren Synchronringes (2), und/oder ein zweiter konischer Innenringkörper (202) des inneren Synchronringes (2) und/oder der erste Mittelringkörper (301), und/oder ein zweiter Mittelringkörper (302) des mittleren Synchronringes (3), und/oder ein Zwischenringkörper (901) eines Zwischensynchronringes (9) in einer senkrecht zur axialen Ringachse (8) verlaufenden Umfangsrichtung eine Trennstelle aufweist.

2. Synchronisiereinrichtung nach Anspruch 1, wobei der erste innere Mittelringwinkel (α₃₀₁₁) kleiner als der erste äussere Mittelringwinkel (α₃₀₁₂) ausgebildet ist.

3. Synchronisiereinrichtung nach Anspruch 1 oder 2, wobei der mittlere Synchronring (3) aus dem ersten konischen Mittelringkörper (301) und dem zweiten konischen Mittelringkörper (302) gebildet ist, wobei der zweite Mittelringkörper (302) eine zweite innere Mittelringfläche (3021) und eine zweite äussere Mittelringfläche (3022) umfasst, die den zweiten Mittelringkörper (302) in einer zu der axialen Ringachse (8) verlaufenden radialen Richtung jeweils begrenzen, wobei sich die zweite innere Mittelringfläche (3021) unter einem zweiten inneren Mittelringwinkel (α₃₀₂₁) und die zweite äussere Mittelringfläche (3022) unter einem zweiten äusseren Mittelringwinkel (α₃₀₂₂) zu der Ringachse (8) erstrecken, wobei der zweite innere Mittelringwinkel (α₃₀₂₁) dem ersten äusseren Mittelringwinkel (α₃₀₁₂), und im Betriebszustand die zweite innere Mittelringfläche (3021) mit der ersten äusseren Mittelringfläche (3012) wenigstens teilweise formschlüssig verbunden ist und die zweite äussere Mittelringfläche (3022) mit dem äusseren Synchronring (4) zusammenwirkt.

4. Synchronisiereinrichtung nach einem der Ansprüche 1 bis 3, wobei der innere Synchronring (2) aus dem ersten konischen Innenringkörper (201) und dem zweiten konischen Innenringkörper (202) gebildet ist, wobei der erste Innenringkörper (201) eine erste innere Innenringfläche (2011) und eine erste äussere Innenringfläche (2012) umfasst, die den ersten Innenringkörper (201) in einer zu der axialen Ringachse (8) verlaufenden radialen Richtung jeweils begrenzen, wobei sich die erste innere Inennringfläche (2011) unter einem ersten inneren Innenringwinkel (α₂₀₁₁) und die erste äussere Innenringfläche (2012) unter einem ersten äusseren Innenringwinkel (α₂₀₁₂) zu der Ringachse (8) erstrecken, und der zweite Innenringkörper (202) eine zweite innere Innenringfläche (2021) und eine zweite äussere Innenringfläche (2022) umfasst, die den zweiten Innenringkörper (202) in einer zu der axialen Ringachse (8) verlaufenden radialen Richtung jeweils begrenzen, wobei sich die zweite innere Innenringfläche (2021) unter einem zweiten inneren Innenringwinkel (α₂₀₂₁) und die zweite äussere Innenringfläche (2022) unter einem zweiten äusseren Innenringwinkel (α₂₀₂₂) zu der Ringachse (8) erstrecken, wobei der zweite innere Innenringwinkel (α₂₀₂₁) dem ersten äusseren Innenringwinkel (α₂₀₁₂) entspricht, und im Betriebszustand die erste innere Innenringfläche (2011) mit dem zweiten Schaltelement (7) zusammenwirkt, die zweite innere Innenringfläche (2021) mit der ersten äusseren Innenringfläche (2012) formschlüssig verbunden ist und die zweite äussere Innenringfläche (2022) mit der ersten inneren Mittelringfläche (3011) zusammenwirkt.

5. Synchronisiereinrichtung nach einem der Ansprüche 1 bis 4, wobei die Synchronisiereinrichtung (1) einen Zwischensynchronring (9) mit dem konischen Zwischenringkörper (901) umfasst, wobei der Zwischenringkörper (901) eine innere Zwischenringfläche (9011) und eine äussere Zwischenringfläche (9012) umfasst, die den Zwischenringkörper (901) in einer zu der axialen Ringachse (8) verlaufenden radialen Richtung jeweils begrenzen, wobei sich die innere Zwischenringfläche (9011) unter einem inneren Zwischenringwinkel (α₉₀₁₁) und die äussere Zwischenringfläche (9012) unter einem äusseren Zwischenringwinkel (α₉₀₁₂) zu der Ringachse (8) erstreckt, wobei im Betriebszustand der Zwischensynchronring (9) zwischen dem äusseren Synchronring (4) und dem mittleren Synchronring (3) angeordnet ist und drehfest mit dem inneren Synchronring (2) und dem äusseren Synchronring (4) verbunden ist, wobei der innere Zwischenringwinkel (α₉₀₁₁) dem ersten äusseren Mittelringwinkel (α₃₀₁₂) und der äussere Zwischenringwinkel (α₉₀₁₂) einem inneren Aussenringwinkel (α₄₀₁₁) entspricht, so dass im Betriebszustand die innere Zwischenringfläche (9011) mit der ersten äusseren Mittelringfläche (3012) zusammenwirkt, und die äussere Zwischenringfläche (9012) mit dem äusseren Synchronring (4) wenigstens teilweise formschlüssig verbunden ist.

6. Synchronisiereinrichtung nach einem der Ansprüche 1 bis 5, wobei der erste innere Innenringwinkel (α₂₀₁₁) und/oder der erste äussere Innenringwinkel (α₂₀₁₂) und/oder der zweite äussere Innenringwinkel (α₂₀₂₂) und/oder der erste innere Mittelringwinkel (α₃₀₁₁) und/oder der erste äussere Mittelringwinkel (α₃₀₁₂) und/oder der zweite äussere Mittelringwinkel (α₃₀₂₂) und/oder der innere Zwischenringwinkel (α₉₀₁₁) und/oder der äussere Zwischenringwinkel (α₉₀₁₂) 3-5° beträgt.

7. Synchronisiereinrichtung nach Anspruch 6, wobei im Nicht-Betriebszustand die Trennstelle offen oder geschlossen ist.

8. Synchronisiereinrichtung nach einem der Ansprüche 1 bis 7, wobei der erste Innenringkörper (201) und/oder der zweite Innenringkörper (202) und/oder der erste Mittelringkörper (301) und/oder der zweite Mittelringkörper (302) und/oder der Zwischenringkörper (901) wenigstens einen Anschlag zur Fixierung in Richtung der Ringachse (8) aufweist.

9. Synchronisiereinrichtung nach einem der Ansprüche 1 bis 8, wobei an der ersten inneren Innenringfläche (2011) und/oder an der ersten äusseren Innenringfläche (2012) und/oder an der zweiten inneren Innenringfläche (2021) und/oder an der zweiten äusseren Innenringfläche (2022) und/oder an der ersten inneren Mittelringfläche (3011) und/oder an der ersten äusseren Mittelringfläche (3012) und/oder an der zweiten inneren Mittelringfläche (3021) und/oder an der zweiten äusseren Mittelringfläche (3022) und/oder an der inneren Zwischenringfläche (9011) und/oder an der äusseren Zwischenringfläche (9012) eine Reibbeschichtung, insbesondere ein Reibbeschichtung in Form eines Karbon Reibbelags vorgesehen ist.

10. Synchronisiereinrichtung nach einem der Ansprüche 1 bis 8, wobei an der ersten inneren Innenringfläche (2011) und/oder an der ersten äusseren Innenringfläche (2012) und/oder an der zweiten inneren Innenringfläche (2021) und/oder an der zweiten äusseren Innenringfläche (2022) und/oder an der ersten inneren Mittelringfläche (3011) und/oder an der ersten äusseren Mittelringfläche (3012) und/oder an der zweiten inneren Mittelringfläche (3021) und/oder an der zweiten äusseren Mittelringfläche (3022) und/oder an der inneren Zwischenringfläche (9011) und/oder an der äusseren Zwischenringfläche (9012) eine adhäsionsvermindernde Oberflächenstruktur vorgesehen ist.

11. Zahnräderwechselgetriebe für ein Kraftfahrzeug mit einer Synchronisiereinrichtung (1) nach einem der Ansprüche 1 bis 10.

## Claims

1. Synchronizing device (1) for a gear changing transmission of a motor vehicle, comprising an inner synchronizer ring (2), a middle synchronizer ring (3) and an outer synchronizer ring (4), wherein in an operating mode the outer synchronizer ring (4) and the inner synchronizer ring (2) are connected essentially torque proof with a first shifting element (6), and in the operating mode the middle synchronizer ring (3) is connected essentially torque proof with a second shifting element (7), and whereby the middle synchronizer ring (3) comprises a first conical middle ring body (301) with a first inner surface of the middle ring (3011) and a first outer surface of the middle ring (3012), which each bound the first middle ring body (301) in a radial direction extending to an axial ring axis (8), wherein the first inner surface of the middle ring (3011) extending at a first inner angle (α₃₀₁₁) of the middle ring and the first outer surface of the middle ring (3012) at a first outer angle (α₃₀₁₂) of the middle ring to the ring axis (8), and in the operating mode the first inner surface of the middle ring (3011) is interacting with the inner synchronizer ring (2) and the first outer surface of the middle ring (3012) is directly or indirectly interacting with the outer synchronizer ring (4), wherein the first inner angle (α₃₀₁₁) of the middle ring and the first outer angle (α₃₀₁₂) of the middle ring are different, **characterized in that** a first conical inner ring body (201) of the inner synchronizer ring (2) and / or a second conical inner ring body (202) of the inner synchronizer ring (2) and / or the first middle ring body (301) and / or a second middle ring body (302) of the middle synchronizer ring (3) and / or an intermediate ring body (901) of an intermediate synchronizer ring (9) has a cutoff in a circumferential direction extending vertical to the axial ring axis (8).

2. Synchronizing device according to claim 1, wherein the first inner angle (α₃₀₁₁) of the middle ring is smaller than the first outer angle (α₃₀₁₂) of the middle ring.

3. Synchronizing device according to claim 1 or 2, wherein the middle synchronizer ring (3) is made of the first conical middle ring body (301) and the second conical middle ring body (302), the second middle ring body (302) comprising a second inner surface of the middle ring (3021) and a second outer surface of the middle ring (3022), which each bound the second middle ring body (302) in a radial direction extending to the axial ring axis (8), wherein the second inner surface of the middle ring (3021) extending at a second inner angle (α₃₀₂₁) of the middle ring and the second outer surface of the middle ring (3022) at a second outer angle (α₃₀₂₂) of the middle ring to the ring axis (8), wherein the second inner angle (α₃₀₂₁) of the middle ring corresponds to the first outer angle (α₃₀₁₂) of the middle ring, and in the operating mode the second inner surface of the middle ring (3021) is form-locking connected, at least partially, to the first outer surface of the middle ring (3012) and the second outer surface of the middle ring (3022) interacts with the outer synchronizer ring (4).

4. Synchronizing device according to one of the claims 1 to 3, wherein the inner synchronizer ring (2) is made of the first conical inner ring body (201) and the second conical inner ring body (202), wherein the first inner ring body (201) comprises a first inner surface of the inner ring (2011) and a first outer surface of the inner ring (2012), which each bound the first inner ring body (201) in a radial direction extending to the axial ring axis (8), wherein the first inner surface of the inner ring (2011) extending at a first inner angle (α₂₀₁₁) of the inner ring and the first outer surface of the inner ring (2012) at a first outer angle (α₂₀₁₂) of the inner ring to the ring axis (8), and the second inner ring body (202) comprising a second inner surface of the inner ring (2021) and a second outer surface of the inner ring (2022), which each bound the second inner ring body (202) in a radial direction extending to the axial ring axis (8), wherein the second inner surface of the inner ring (2021) extending at a second inner angle (α₂₀₂₁) of the inner ring and the second outer surface of the inner ring (2022) at a second outer angle (α₂₀₂₂) of the inner ring to the ring axis (8), wherein the second inner angle (α₂₀₂₁) of the inner ring corresponds to the first outer angle (α₂₀₁₂) of the inner ring, and in the operating mode the first inner surface of the inner ring (2011) interacts with the second shifting element (7), the second inner surface of the inner ring (2021) is form-locking connected to the first outer surface of the inner ring (2012) and the second outer surface of the inner ring (2022) interacts with the first inner surface of the middle ring (3011).

5. Synchronizing device according to one of the claims 1 to 4, the synchronizing device (1) comprising an intermediate synchronizer ring (9) with the conical intermediate ring body (901), the intermediate ring body (901) comprising an inner surface of the intermediate ring (9011) and an outer surface of the intermediate ring (9012), which each bound the intermediate ring body (901) in a radial direction extending to the axial ring axis (8), wherein the inner surface of the intermediate ring (9011) extending at an inner angle (α₉₀₁₁) of the intermediate ring and the outer surface of the intermediate ring (9012) at an outer angle (α₉₀₁₂) of the intermediate ring to the ring axis (8), wherein in the operating mode the intermediate synchronizer ring (9) is arranged between the outer synchronizer ring (4) and the middle synchronizer ring (3) and is connected torque proof to the inner synchronizer ring (2) and the outer synchronizer ring (4), wherein the inner angle (α₉₀₁₁) of the intermediate ring corresponds to the first outer angle (α₃₀₁₂) of the middle ring and the outer angle (α₉₀₁₂) of the intermediate ring to an inner angle (α₄₀₁₁) of the outer ring, so that in the operating mode the inner surface of the intermediate ring (9011) interacts with the first outer surface of the middle ring (3012), and the outer surface of the intermediate ring (9012) is form-locking connected, at least partially, to the outer synchronizer ring (4).

6. Synchronizing device according to one of the claims 1 to 5, wherein the first inner angle (α₂₀₁₁) of the inner ring and / or the first outer angle (α₂₀₁₂) of the inner ring and / or the second outer angle (α₂₀₂₂) of the inner ring and / or the first inner angle (α₃₀₁₁) of the middle ring and / or the first outer angle (α₃₀₁₂) of the middle ring and / or the second outer angle (α₃₀₂₂) of the middle ring and / or the inner angle (α₉₀₁₁) of the intermediate ring and / or the outer angle (α₉₀₁₂) of the intermediate ring is 3-5°.

7. Synchronizing device according to claim 6, wherein the cutoff is open or closed in the non-operating mode.

8. Synchronizing device according to one of the claims 1 to 7, wherein the first inner ring body (201) and / or the second inner ring body (202) and / or the first middle ring body (301) and / or the second middle ring body (302) and / or the intermediate ring body (901) having at least one limit stop for fixing in direction to the ring axis (8).

9. Synchronizing device according to one of the claims 1 to 8, wherein a friction layer, especially a friction layer in the form of a carbon friction layer, is provided at the first inner surface of the inner ring (2011) and / or at the first outer surface of the inner ring (2012) and / or at the second inner surface of the inner ring (2021) and / or at the second outer surface of the inner ring (2022) and / or at the first inner surface of the middle ring (3011) and / or at the first outer surface of the middle ring (3012) and / or at the second inner surface of the middle ring (3021) and / or at the second outer surface of the middle ring (3022) and / or at the inner surface of the intermediate ring (9011) and / or at the outer surface of the intermediate ring (9012).

10. Synchronizing device according to one of the claims 1 to 8, wherein an adhesion reducing surface structure is provided at the first inner surface of the inner ring (2011) and / or at the first outer surface of the inner ring (2012) and / or at the second inner surface of the inner ring (2021) and / or at the second outer surface of the inner ring (2022) and / or at the first inner surface of the middle ring (3011) and / or at the first outer surface of the middle ring (3012) and / or at the second inner surface of the middle ring (3021) and / or at the second outer surface of the middle ring (3022) and / or at the inner surface of the intermediate ring (9011) and / or at the outer surface of the intermediate ring (9012).

11. Gear changing transmission for a motor vehicle with a synchronizing device (1) according to one of the claims 1 to 10.

## Revendications

1. Un dispositif de synchronisation (1) pour une boîte de vitesse à roues dentées d'un véhicule automobile comprenant une bague de synchronisation intérieure (2), une bague de synchronisation centrale (3) et une bague de synchronisation extérieure (4), dans lequel, à l'état de fonctionnement, la bague de synchronisation extérieure (4) et la bague de synchronisation intérieure (2) sont reliées à un premier élément de commutation (6) de manière essentiellement fixe en rotation et, à l'état de fonctionnement, la bague de synchronisation centrale (3) est reliée à un deuxième élément de commutation (7) de manière essentiellement fixe en rotation, et dans lequel la bague de synchronisation centrale (3) comprend un premier corps de bague central conique (301) avec une première surface intérieure de bague centrale (3011) et une première surface extérieure de la bague centrale (3012), qui limitent chacun le premier corps de bague central (301) dans une direction radiale s'étendant jusqu'à l'axe de bague axial (8), dans lequel la première surface intérieure de bague centrale (3011) s'étend selon un premier angle intérieur de la bague centrale (α₃₀₁₁) et la première surface extérieure de bague centrale (3012) s'étend selon un premier angle extérieur de bague centrale (α₃₀₁₂) jusqu'à l'axe de bague (8), et à l'état de fonctionnement, la première surface intérieure de la bague centrale (3011) interagit avec la bague de synchronisation intérieure (2) et la première surface extérieure de la bague centrale (3012) interagit directement ou indirectement avec la bague de synchronisation extérieure (4), dans lequel le premier angle intérieur de la bague centrale (α₃₀₁₁) et le premier angle extérieur de la bague centrale (α₃₀₁₂) sont formés différemment, **caractérisé en ce qu'**un premier corps de bague intérieure conique (201) de la bague de synchronisation intérieure (2) et / ou un deuxième corps de bague intérieure conique (202) de la bague de synchronisation intérieure (2) et / ou le premier corps de bague central (301) et / ou un deuxième corps de bague central (302) de la bague de synchronisation centrale (3) et / ou un corps de bague intermédiaire (901) d'une bague de synchronisation intermédiaire (9) a un point de séparation dans une direction circonférentielle s'étendant perpendiculaire à l'axe de bague axial (8).

2. Un dispositif de synchronisation selon la revendication 1, dans lequel le premier angle intérieur de la bague centrale (α₃₀₁₁) est plus petit que le premier angle extérieur de la bague centrale (α₃₀₁₂).

3. Un dispositif de synchronisation selon la revendication 1 ou 2, dans lequel la bague de synchronisation centrale (3) est formée du premier corps de bague central conique (301) et du deuxième corps de bague central conique (302), dans lequel le deuxième corps de bague central (302) comprend une deuxième surface intérieure de la bague centrale (3021) et une deuxième surface extérieure de la bague centrale (3022), qui limitent chacun le deuxième corps de bague central (302) dans une direction radiale s'étendant jusqu'à l'axe de bague axial (8), dans lequel la deuxième surface intérieure de la bague centrale (3021) s'étend selon un deuxième angle intérieur de bague centrale (α₃₀₂₁) et la deuxième surface extérieure de la bague centrale (3022) s'étend selon un deuxième angle extérieur de la bague centrale (α₃₀₂₂) jusqu'à l'axe de bague (8), le deuxième angle intérieur de bague centrale (α₃₀₂₁) correspondant au premier angle extérieur de bague centrale (α₃₀₁₂), et à l'état de fonctionnement, la deuxième surface intérieure de la bague centrale (3021) est au moins partiellement reliée positivement à la première surface extérieure de la bague centrale (3012) et la deuxième surface extérieure de la bague centrale (3022) interagit avec la bague de synchronisation extérieure (4).

4. Un dispositif de synchronisation selon l'une des revendications 1 à 3, dans lequel la bague de synchronisation intérieure (2) est formée du premier corps de bague intérieure conique (201) et du deuxième corps de bague intérieure conique (202), dans lequel le premier corps de bague intérieure (201) comprend une première surface intérieure de la bague intérieure (2011) et une première surface extérieure de la bague intérieure (2012), qui limitent chacun le premier corps de bague intérieure (201) dans une direction radiale s'étendant jusqu'à un axe de bague axial (8), dans lequel la première surface intérieure de la bague intérieure (2011) s'étend selon un premier angle intérieur de la bague intérieure (α₂₀₁₁) et la première surface extérieure de bague intérieure (2012) s'étend selon un premier angle extérieur de bague intérieure (α₂₀₁₂) jusqu'à l'axe de bague (8), et le deuxième corps de bague intérieure (202) comprend une deuxième surface intérieure de la bague intérieure (2021) et une deuxième surface extérieure de la bague intérieure (2022), qui limitent chacun le deuxième corps de bague intérieure (202) dans une direction radiale s'étendant jusqu'à l'axe de bague axial (8), dans lequel la deuxième surface intérieure de la bague intérieure (2021) s'étend selon un deuxième angle intérieur de bague intérieure (α₂₀₂₁) et la deuxième surface extérieure de la bague intérieure (2022) s'étend selon un deuxième angle extérieur de la bague intérieure (α₂₀₂₂) jusqu'à l'axe de bague (8), le deuxième angle intérieur de la bague intérieure (α₂₀₂₁) correspondant au premier angle extérieur de la bague intérieure (α₂₀₁₂), et à l'état de fonctionnement, la première surface intérieure de la bague intérieure (2011) interagit avec le deuxième élément de commutation (7), la deuxième surface intérieure de la bague intérieure (2021) est reliée positivement à la première surface extérieure de la bague intérieure (2012) et la deuxième surface extérieure de la bague intérieure (2022) interagit avec la première surface intérieure de la bague centrale (3011).

5. Un dispositif de synchronisation selon l'une des revendications 1 à 4, dans lequel le dispositif de synchronisation (1) comprend une bague de synchronisation intermédiaire (9) avec le corps de bague intermédiaire conique (901), dans lequel le corps de bague intermédiaire (901) comprend une surface intérieure de la bague intermédiaire (9011) et une surface extérieure de la bague intermédiaire (9012), qui limitent chacun le corps de bague intermédiaire (901) dans une direction radiale s'étendant jusqu'à un axe de bague axial (8), dans lequel la surface intérieure de la bague intermédiaire (9011) s'étend selon un angle intérieur de la bague intermédiaire (α₉₀₁₁) et la surface extérieure de la bague intermédiaire (9012) s'étend selon un angle extérieur de la bague intermédiaire (α₉₀₁₂) jusqu'à l'axe de bague (8), dans lequel, à l'état de fonctionnement, la bague de synchronisation intermédiaire (9) est disposée entre la bague de synchronisation extérieure (4) et la bague de synchronisation centrale (3) et est reliée à la bague de synchronisation intérieure (2) et la bague de synchronisation extérieure (4) de manière fixe en rotation, dans lequel l'angle intérieur de bague intermédiaire (α₉₀₁₁) correspond au premier angle extérieur de bague centrale (α₃₀₁₂) et l'angle extérieur de la bague intermédiaire (α₉₀₁₂) correspond à un angle intérieur de la bague extérieure (α₄₀₁₁), que dans l'état de fonctionnement, la surface intérieure de la bague intermédiaire (9011) interagit avec la première surface extérieure de la bague centrale (3012) et la surface extérieure de la bague intermédiaire (9012) est au moins partiellement reliée positivement à la bague de synchronisation extérieure (4).

6. Un dispositif de synchronisation selon l'une des revendications 1 à 5, dans lequel le premier angle intérieur de la bague intérieure (α₂₀₁₁) et / ou le premier angle extérieur de la bague intérieure (α₂₀₁₂)) et / ou le deuxième angle extérieur de la bague intérieure (α₂₀₂₂) et / ou le premier angle intérieur de la bague centrale (α₃₀₁₁) et / ou le premier angle extérieur de la bague centrale (α₃₀₁₂) et / ou le deuxième angle extérieur de la bague centrale (α₃₀₂₂) et / ou l'angle intérieur de la bague intermédiaire (α₉₀₁₁) et / ou l'angle extérieur de la bague intermédiaire (α₉₀₁₂) est de 3-5°.

7. Un dispositif de synchronisation selon la revendication 6, le point de séparation étant ouvert ou fermé à l'état de non-fonctionnement.

8. Un dispositif de synchronisation selon l'une des revendications 1 à 7, dans lequel le premier corps de bague intérieure (201) et / ou le deuxième corps de bague intérieure (202) et / ou le premier corps de bague central (301) et / ou le deuxième corps de bague central (302) et / ou le corps de bague intermédiaire (901) a au moins une butée pour la fixation dans la direction de l'axe de bague (8).

9. Un dispositif de synchronisation selon l'une des revendications 1 à 8, dans lequel un revêtement de friction, en particulier un revêtement de friction sous la forme d'une garniture de friction en carbone, est prévu sur la première surface intérieure de la bague intérieure (2011) et / ou sur la première surface extérieure de la bague intérieure (2012) et / ou sur la deuxième surface intérieure de la bague intérieure (2021) et / ou sur la deuxième surface extérieure de la bague intérieure (2022) et / ou sur la première surface intérieure de la bague centrale (3011) et / ou sur la première surface extérieure de la bague centrale (3012) et / ou sur la deuxième surface intérieure de la bague centrale (3021) et / ou sur la deuxième surface extérieure de la bague centrale (3022) et / ou sur la surface intérieure de la bague intermédiaire (9011) et / ou sur la surface extérieure de la bague intermédiaire (9012).

10. Un dispositif de synchronisation selon l'une des revendications 1 à 8, dans lequel une structure de surface réduisant l'adhérence est pourvue sur la première surface intérieure de la bague intérieure (2011) et / ou sur la première surface extérieure de la bague intérieure (2012) et / ou sur la deuxième surface intérieure de la bague intérieure (2021) et / ou sur la deuxième surface extérieure de la bague intérieure (2022) et / ou sur la première surface intérieure de la bague centrale (3011) et / ou sur la première surface extérieure de la bague centrale (3012) et / ou sur la deuxième surface intérieure de la bague centrale (3021) et / ou sur la deuxième surface extérieure de la bague centrale (3022) et / ou sur la surface intérieure de la bague intermédiaire (9011) et / ou sur la surface extérieure de la bague intermédiaire (9012).

11. Une transmission de changement de vitesse pour un véhicule automobile avec un dispositif de synchronisation (1) selon l'une des revendications 1 à 10.
